# FASCICULE DE BREVET EUROPEEN

(11) **EP 2 177 325 B1**
(45) Date de publication et mention de la délivrance du brevet: **31.08.2011**
(21) Numéro de dépôt: 09173227.1
(22) Date de dépôt: 16.10.2009
(51) Int. Cl.: B25J 9/04, B25J 9/10

(54) **Structure articulée de robot multi-axes et robot comprenant une telle structure**
Gelenkstruktur eines Mehrachs-Roboters und eine solche Struktur aufweisender Roboter
Articulated structure of a multiple-axis robot and robot comprising such a structure

(30) Priorité: 17.10.2008 FR 0857097
(43) Date de publication de la demande: 21.04.2010
(73) Titulaire: Staubli Faverges, 74210 Faverges (FR)
(72) Inventeur: Palau, Joseph, 74320 Sévrier (FR); Gerat, Vincent, 74410 Saint Jorioz (FR); Sallet, Eric, 73460 Frontenex (FR)
(74) Mandataire: Myon, Gérard Jean-Pierre

(56) Documents cités:
- EP-A- 0 658 405
- EP-A- 0 667 214
- JP-A- 59 146 774
- US-B1- 6 439 076

## Description

La présente invention a trait à une structure articulée de robot multi-axes avec au moins trois degrés de liberté, plus particulièrement une structure selon le préambule de la revendication 1, ainsi qu'à un robot multi-axes comprenant une telle structure.

Une telle structure est connue du document JP-A-59146774.

Dans le domaine des robots multi-axes, on doit parfois manipuler de façon rapide des pièces, suivant des trajectoires proches d'un plan. Tel est par exemple le cas lorsqu'il s'agit de prendre une pièce qui défile sur un tapis roulant et de la déposer sur un organe de conditionnement plan. Les robots de type SCARA sont adaptés au travail dans un plan horizontal. Il convient parfois que ces robots puissent également effectuer des mouvements dans un plan vertical. Dans ces robots, ce mouvement vertical est généralement assuré par un système de vis à billes placé au voisinage de l'outil, c'est-à-dire au bout de la structure articulée communément appelée « bras de robot ». Il en résulte une inertie importante de cette structure articulée, ce qui limite la vitesse de déplacement de l'outil. En outre, l'encombrement d'un système de vis à billes peut s'avérer gênant dans certaines conditions d'utilisation.

Il est connu de JP-A-59-146774, de réaliser une structure articulée dans laquelle l'avant-bras comprend deux platines entre lesquelles sont articulées deux bielles formant une structure à parallélogramme, ce qui permet de déplacer verticalement l'outil, au moyen d'un actionneur monté sur l'avant-bras. Ce moteur augmente l'inertie de l'avant-bras, ce qui limite les vitesses de déplacement de l'outil.

C'est à ces inconvénients qu'entend plus particulièrement remédier l'invention en proposant une nouvelle structure articulée de robot multi-axes qui comprend au moins trois degrés de liberté et dont l'inertie est suffisamment faible pour être compatible avec des déplacements à vitesse élevée.

A cet effet, l'invention concerne une structure articulée de robot multi-axes avec au moins trois degrés de liberté, cette structure comprenant :
- une embase fixe,
- un bras articulé sur l'embase autour d'un premier axe,
- un avant-bras articulé sur le bras autour d'un deuxième axe parallèle au premier axe, cet avant-bras formant une structure en parallélogramme déformable et comprenant une première bielle et une deuxième bielle articulées sur deux platines, respectivement autour d'axes perpendiculaires au premier et au deuxième axes,
- un premier actionneur électrique commandant le pivotement du bras autour du premier axe,
- un deuxième actionneur électrique commandant le pivotement de l'avant-bras autour du deuxième axe, et
- un troisième actionneur électrique commandant le pivotement de la première bielle par rapport aux platines, autour de certains des axes perpendiculaires aux premier et deuxième axes.

Cette structure est caractérisée en ce que le troisième actionneur est monté sur l'embase ou sur le bras.

Grâce à l'invention, l'inertie de l'avant-bras est sensiblement diminuée par rapport aux dispositifs de l'art antérieur, dans la mesure où l'avant-bras ne doit pas déplacer le troisième actionneur dans ses mouvements de pivotement autour du deuxième axe. Ceci permet d'atteindre des vitesses de déplacement élevées de l'extrémité de la structure articulée qui porte un outil.

Selon des aspects avantageux mais non obligatoires de l'invention, une telle structure peut incorporer une ou plusieurs des caractéristiques suivantes, prises dans toute combinaison techniquement admissible :
- Le troisième actionneur est rotatif et son arbre de sortie est centré sur un axe parallèle au premier axe,
- Les moyens de transmission de mouvement entre le troisième actionneur et les bielles de l'avant-bras comprennent au moins une courroie et un renvoi d'angle à 90°. Ce renvoi d'angle peut comprendre un couple d'engrenages conique, spyro-conique, hypoïde ou de type CYLKRO (marque déposée) ou un système à roue et vis sans fin.
- Selon certains modes de réalisation, le troisième actionneur est monté sur le bras,
- Selon d'autres modes de réalisation, au moins les premier et troisième actionneurs sont montés sur l'embase. Dans ce cas, le troisième actionneur est avantageusement de type rotatif et l'axe de rotation de son arbre de sortie est aligné avec le premier axe. En outre, les premier et troisième actionneurs peuvent être de type rotatif et les axes de rotation de leurs arbres de sortie respectifs peuvent être alignés.
- L'une des deux bielles de l'avant-bras forme un boîtier qui entoure l'autre bielle,
- La structure comprend un quatrième actionneur qui commande le pivotement d'une bride porte-outil autour d'un quatrième axe parallèle aux premier et deuxième axes. Dans ce cas, on peut prévoir que la première bielle est solidaire en rotation, autour d'un des axes perpendiculaires aux premier et deuxième axes, de moyens de transmission d'un mouvement généré par le troisième actionneur, que la deuxième bielle est suiveuse de la première bielle dans le mouvement de pivotement des bielles par rapport aux platines, que le quatrième actionneur est monté sur une platine de l'avant-bras qui est articulée sur le bras, que la bride porte-outil est supportée par l'autre platine et que la deuxième bielle transmet à la bride porte-outil le mouvement généré par le quatrième actionneur.

L'invention concerne également un robot multi-axes équipé d'une structure articulée tel que mentionné ci-dessus. Un tel robot peut fonctionner à des vitesses plus élevées que ceux de l'état de la technique. En outre, compte-tenu des masses plus faibles en mouvement, sa durée de vie est augmentée.

L'invention sera mieux comprise et d'autres avantages de celle-ci apparaîtront plus clairement à la lumière de la description qui va suivre de quatre modes de réalisation d'une structure articulée et d'un robot multi-axes conforme à son principe, donnée uniquement à titre d'exemples et faite en référence aux dessins annexés dans lesquels :
- la figure 1 est une vue en perspective d'une structure articulée de robot multi-axes conforme à un premier mode de réalisation de l'invention,
- la figure 2 est une coupe longitudinale de la structure de la figure 1 en configuration rectiligne,
- la figure 3 est une coupe à plus grande échelle selon la ligne III-III à la figure 2,
- la figure 4 est une vue analogue à la figure 1 pour une structure conforme à un deuxième mode de réalisation de l'invention,
- la figure 5 est une coupe longitudinale, analogue à la figure 2, pour la structure de la figure 4,
- la figure 6 est une vue analogue à la figure 1 pour une structure conforme à un troisième mode de réalisation de l'invention,
- la figure 7 est une coupe longitudinale, analogue à la figure 2, pour la structure de la figure 6,
- la figure 8 est une vue de dessus d'une partie du bras et de l'avant-bras de la structure des figures 6 et 7 ; on y a indiqué en VII-VII le plan de coupe de la figure 7,
- la figure 9 est une coupe à plus grande échelle selon la ligne IX-IX à la figure 7,
- la figure 10 est une vue analogue à la figure 1, à plus petite échelle, pour une structure conforme à un quatrième mode de réalisation de l'invention, et
- la figure 11 est une coupe longitudinale, analogue à la figure 2 pour la structure de la figure 10.

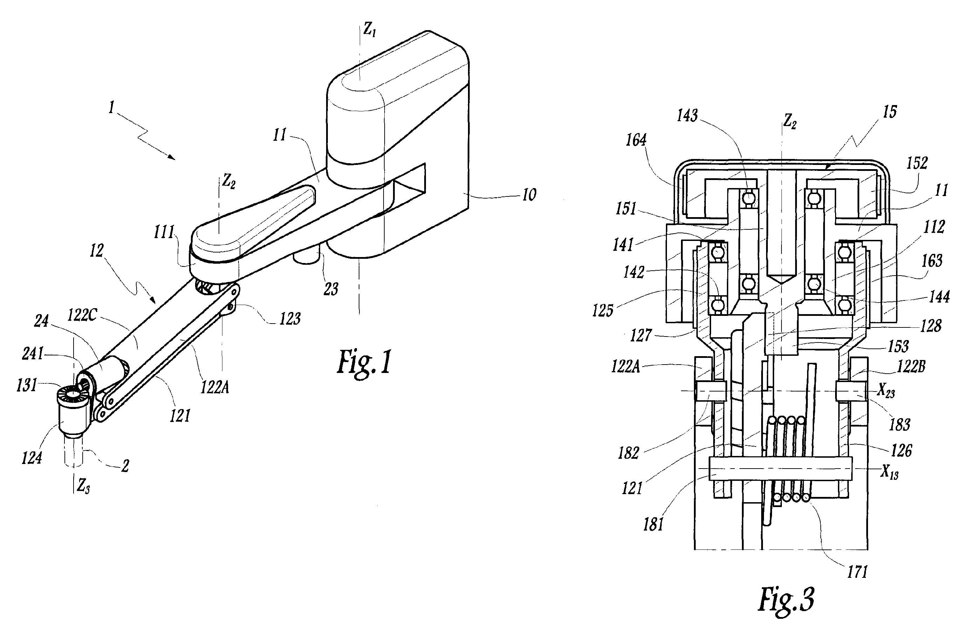

La structure 1 visible aux figures 1 à 3 appartient à un robot multi-axes qui comprend également une unité de commande électronique, des faisceaux de câbles et/ou de conduit d'alimentation en gaz sous pression et d'autres accessoires qui ne sont pas représentés pour la clarté du dessin. Ces éléments ne sont pas non plus représentés pour les robots des autres modes de réalisation.

Cette structure 1 est destinée à déplacer vers différentes positions, un outil 2 représenté, de façon schématique et en traits mixtes uniquement à la figure 1, avec des trajectoires s'étendant à la fois dans un plan horizontal et perpendiculairement à ce plan. L'outil 2 peut, par exemple, être un outil de préhension.

La structure 1 comprend une embase 10 fixe par rapport au local dans lequel est installée la structure 1. Cette embase forme une chape d'articulation d'un bras 11 autour d'un axe vertical Z₁.

Un premier actionneur 21, formé par un motoréducteur rotatif électrique dont l'arbre de sortie 211 est aligné sur l'axe Z₁ et solidaire en rotation du bras 11, est monté sur l'embase 10. L'actionneur 21 entraîne le bras 11 en rotation autour de l'axe Z₁.

Le bras 11 supporte un avant-bras 12 qui est articulé par rapport au bras 11 autour d'un axe Z₂ parallèle à l'axe Z₁ et donc également vertical dans l'exemple représenté.

L'avant-bras 12 comprend une première bielle, dite bielle principale 121, et une deuxième bielle, dite bielle secondaire ou suiveuse 122, qui s'étendent parallèlement l'une à l'autre à partir d'une platine 123 appartenant à l'avant-bras 12 et montée sur l'extrémité 111 du bras 11 la plus éloignée de l'embase 10. L'avant-bras 12 comprend également une deuxième platine 124 qui supporte une bride porte-outil 13 sur laquelle peut être installé l'outil 2. La platine 124 forme un fut de réception dans lequel est montée la bride 13, de façon pivotante autour d'un axe Z₃ parallèle aux axes Z₁ et Z₂ et qui est un axe central de la bride 13.

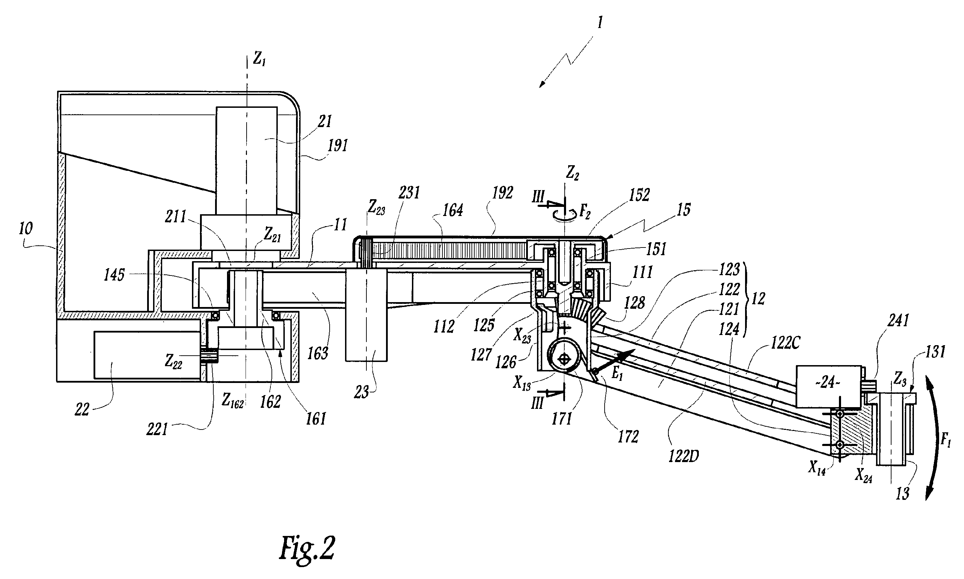

On note respectivement X₁₃ et X₂₃ les axes géométriques d'articulation des bielles 121 et 122 sur la platine 123. On note respectivement X₁₄ et X₂₄ les axes géométriques d'articulation des bielles 121 et 122 sur la platine 124. Les axes X₁₃, X₂₃, X₁₄ et X₂₄ sont perpendiculaires aux axes Z₁ et Z₂ et définissent, dans le plan de la figure 2, un parallélogramme déformable. Les bielles 121 et 122 et les platines 123 et 124 forment donc une structure d'avant-bras 12 en forme de parallélogramme déformable ou articulé, ce qui permet de faire évoluer en hauteur la bride 13, comme représenté par la double flèche F₁ à la figure 2, tout en conservant l'orientation de l'axe central Z₃ de la bride 13.

La platine 123 est montée sur l'extrémité 111 du bras 11 avec possibilité de rotation autour de l'axe Z₂. La platine 123 est de forme tubulaire centrée sur l'axe Z₂ en configuration montée de la structure 1. La platine 123 comprend deux portions 125 et 126 de diamètres différents reliées par une portion tronconique 127.

Le bras 11 forme quant à lui, au voisinage de l'extrémité 111, un manchon 112 centré sur l'axe Z₂. La portion 125 de la platine 123 est disposée autour d'une partie du manchon 112, avec interposition de deux roulements à billes 141 et 142 qui permettent à la platine 123 de tourner autour du manchon 112 et de l'axe Z₂.

Par ailleurs, une tige centrale 151 d'une poulie 15 est disposée à l'intérieur du manchon 112 et alignée sur l'axe Z₂, avec interposition de deux roulements à billes 143 et 144.

Un deuxième actionneur 22 est monté sur la platine 10. L'arbre de sortie 221 de l'actionneur 22 s'étend suivant un axe horizontal Z₂₂ et a une extrémité en forme de pignon qui engrène sur une partie annulaire dentée 161 d'une poulie 162 montée libre en rotation sur l'embase 10 avec interposition d'un roulement à billes 145. L'arbre 221 et la poulie 162 forment ensemble un renvoi d'angle à 90°. L'axe de rotation Z₁₆₂ de la poulie 162 est, dans l'exemple représenté, confondu avec l'axe Z₁.

La poulie 162 entraîne en rotation une courroie 163 qui entoure partiellement la portion 125 de la platine 123. Il est ainsi possible d'entraîner en rotation la platine 123, autour de l'axe Z₂, grâce à un mouvement généré par l'actionneur 22 et transmis par l'intermédiaire des éléments 221, 161, 162 et 163. En d'autres termes, l'actionneur 22 commande le pivotement de l'avant-bras 12 autour de l'axe Z₂.

Un troisième actionneur 23 est monté sur le bras 11 et son arbre de sortie 231 entraîne une courroie 164 qui entoure la tête de la poulie 15. A son extrémité opposée à la tête de poulie, la tige 151 porte un pignon 153 qui est en prise avec un secteur denté 128 solidaire de la bielle 121. L'engrenage constitué des pièces 153 et 128 constitue un renvoi d'angle à 90° permettant de transformer le mouvement de rotation de la poulie 15, autour de l'axe Z₂, en un mouvement de pivotement de la bielle 121 autour de l'axe X₁₃.

L'engrenage formé des pièces 153 et 128 peut être du type connu sous le nom de CILKRO (marque déposée) qui se compose d'un pignon ordinaire taillé par développante et d'une portion de roue à denture complémentaire. Un tel engrenage présente l'avantage que son ajustage est simple puisque la position du pignon 153 le long de son axe de rotation Z₂ n'a pas besoin d'être fixée de façon précise. D'autres types d'engrenages à 90° peuvent être utilisés entre la tige 151 et la bielle 121.

Un ressort 171 est monté dans la portion 126 de la platine 123 et vient en appui contre un pion 172 solidaire de la bielle principale 121, en exerçant sur celui-ci un effort élastique E₁ qui tend à faire remonter la platine 124. Le ressort 171 peut donc être considéré comme un moyen d'assistance au mouvement de la platine 124 vers le haut à la figure 2. Dans le cas où les axes Z₁ et Z₂ sont verticaux, comme représenté sur les figures, le ressort 171 constitue un moyen de compensation du poids de l'outil 2.

Comme il ressort plus particulièrement de la figure 3, un arbre 181 qui s'étend selon l'axe X₁₃ constitue le moyen d'articulation de la bielle 121 sur la platine 123. Le ressort 171 est monté autour de l'arbre 181. Deux pions 182 et 183, qui s'étendent selon l'axe X₂₃, forment les moyens d'articulation de la bielle 122 sur la platine 123. Des arbres de même type sont utilisés pour constituer l'articulation entre les bielles 121 et 122 et la platine 124.

La bielle 121 comprend un voile essentiellement vertical bien visible à la figure 2. La bielle 122 est en forme de caisson à section transversale rectangulaire, avec deux cloisons verticales 122A et 122B visibles aux figures 1 et 3 et deux cloisons 122C et 122D dont l'orientation varie en fonction du pivotement de la bielle 122 autour de l'axe X₂₃ et qui sont visibles à la figure 2.

L'actionneur 23 est un motoréducteur électrique dont le poids est supporté par le bras 11, de sorte que ce poids ne gêne pas les mouvements de l'avant-bras 12 et de la bride 13, représentés par les doubles flèches F₁ et F₂ à la figure 2, ce qui est particulièrement avantageux pour atteindre des vitesses de déplacement élevées de l'outil 2.

On note que les axes Z₂₁, Z₂₂ et Z₂₃ des arbres de sortie 211, 221 et 231 des actionneurs 21, 22 et 23 sont verticaux et parallèles aux axes Z₁ et Z₂. Les axes Z₁ et Z₂₁ sont confondus.

La liaison par poulie 164 et renvoi d'angle à 90°, entre l'actionneur 23 et la bielle 121, permet d'utiliser des matériels légers et de faible inertie pour entraîner l'avant-bras 12 dans les mouvements verticaux de la bride 13. Le rapport de réduction entre l'arbre de sortie 231 et la bielle 121 est compris entre 30 et 100.

De même, la liaison par poulies 162 et 15 et par courroie 163 permet d'utiliser des matériels légers et de faible inertie pour entraîner l'avant-bras 12 en pivotement autour de l'axe Z₂.

Un quatrième actionneur 24 est installé sur la platine 124 et son arbre de sortie 241 forme un pignon qui attaque une surface annulaire dentée 131 de la bride 13, ce qui permet d'entraîner en rotation la bride 13 et l'outil 2 qu'elle porte, autour de l'axe Z₃.

Deux capots 191 et 192 sont respectivement montés sur l'embase 10, pour protéger les actionneurs 21 et 22, et sur le bras 11, pour protéger la courroie 164 et la tête 152 de la poulie 15.

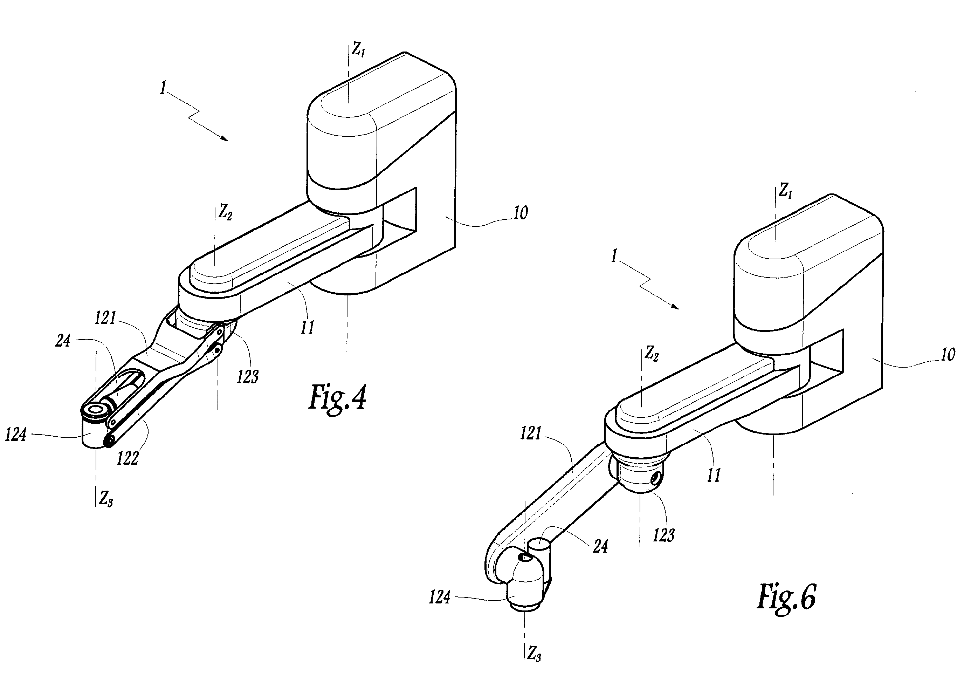

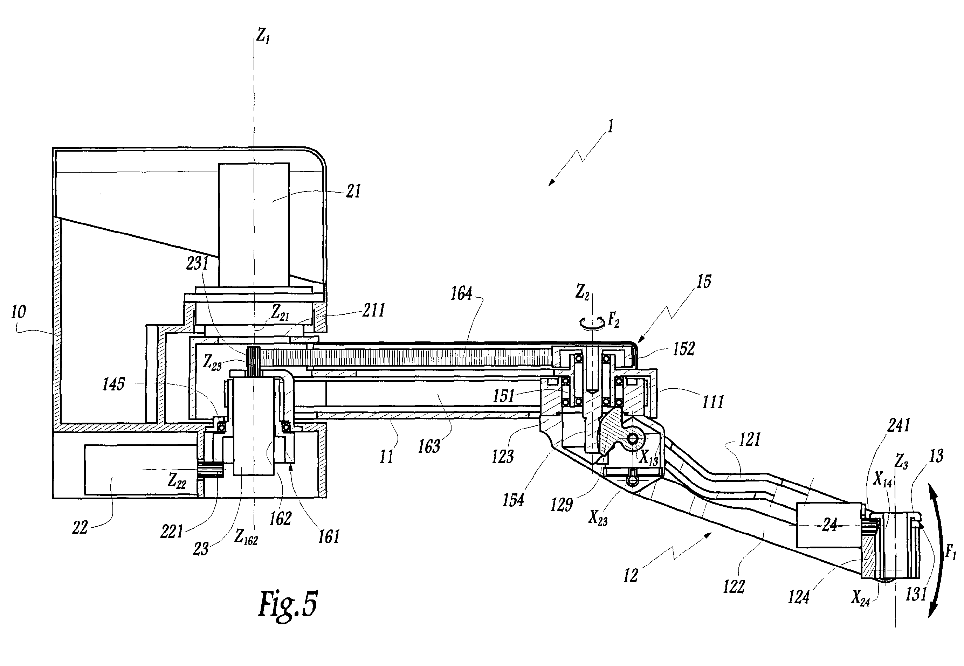

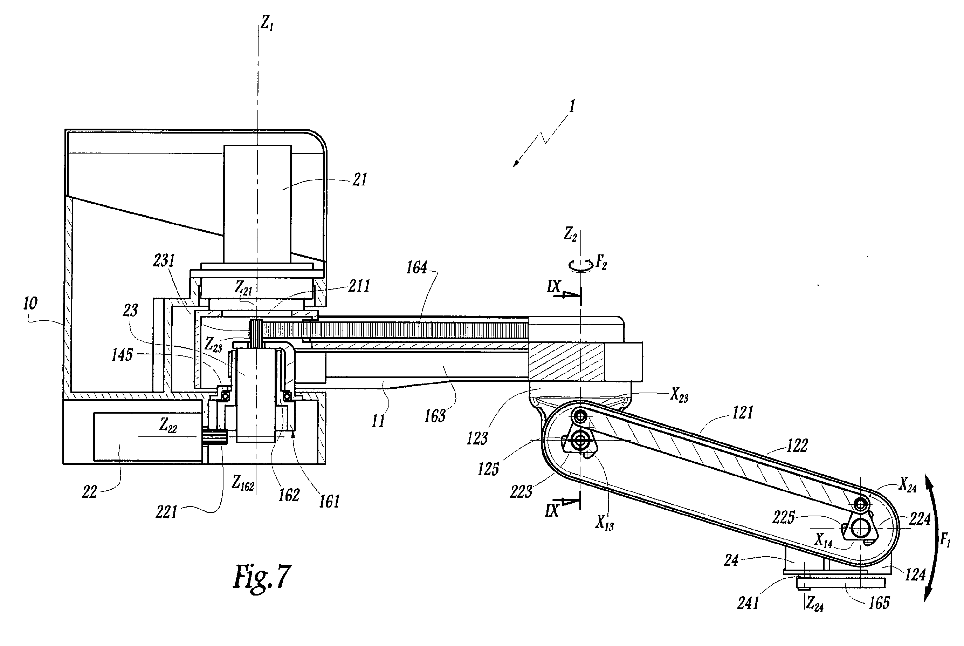

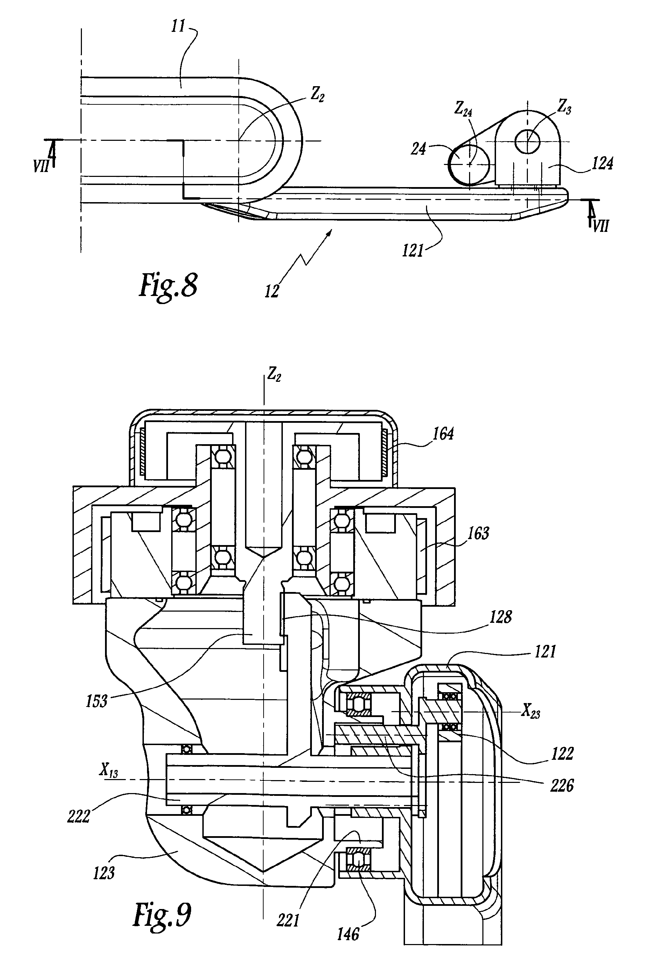

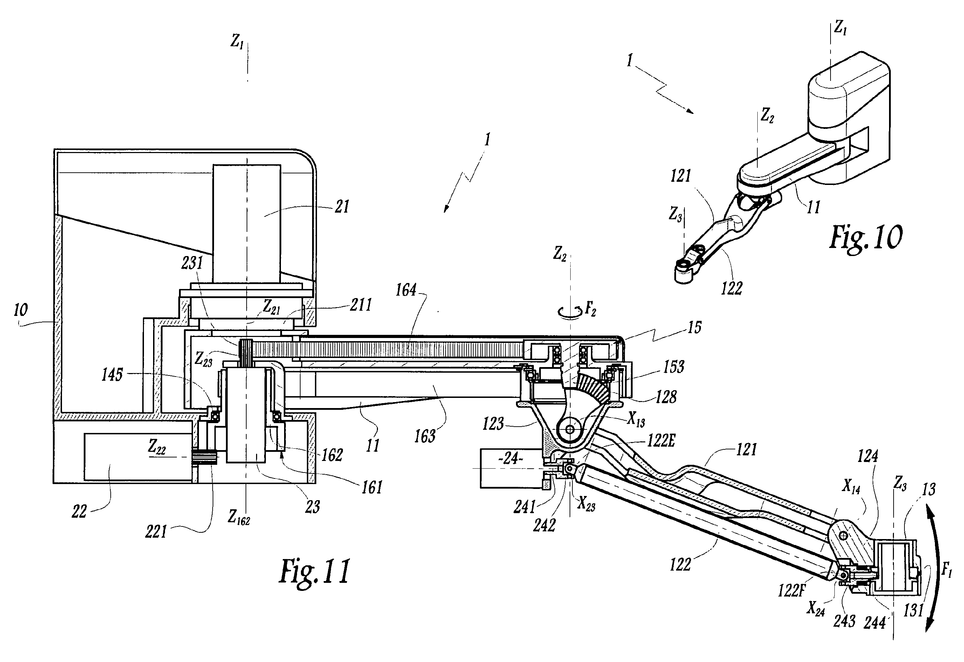

Dans les deuxième à quatrième modes de réalisation de l'invention représentés aux figures 4 à 11, les éléments analogues à ceux du premier mode de réalisation portent les mêmes références.

Dans le deuxième mode de réalisation, la structure articulée 1 comprend une embase 10, un bras 11 et un avant-bras 12 lui-même constitué d'une première bielle 121, dite principale, d'une deuxième bielle 122, dite secondaire, et de deux platines 123 et 124 formant une structure en parallélogramme déformable. Deux actionneurs 21 et 22 sont montés sur l'embase 10 afin de faire pivoter respectivement le bras 11 autour d'un axe vertical Z₁ et l'avant-bras 12 autour d'un axe vertical Z₂ parallèle à l'axe Z₁.

Pour ce faire, l'arbre de sortie 211 de l'actionneur 21 est en prise avec le bras 11 alors que l'arbre de sortie 221 de l'actionneur 22 est en forme de pignon et engrène sur une partie dentée 161 d'une poulie 162. Les éléments 221 et 162 forment ainsi ensemble un renvoi d'angle à 90° et la poulie 162 est entraînée en rotation autour d'un axe Z₁₆₂ aligné sur l'axe Z₁. Cette poulie entraîne elle-même une courroie 163 qui entraîne en rotation la platine 123 de l'avant-bras 12 par laquelle celui-ci est fixé sur l'extrémité 111 du bras 11.

Un troisième actionneur 23 est monté sur l'embase 10 et sert, comme dans le premier mode de réalisation, à entraîner l'avant-bras 12 dans son mouvement de déplacement vertical de la platine 124 représenté par la double flèche F₁.

L'actionneur 23 est installé au centre de la poulie 162 qui est supportée par l'embase 10 avec interposition d'un roulement 145. L'actionneur 23 est monté fixe par rapport à l'embase 10, ce qui est possible grâce à un jeu radial entre cet actionneur et la poulie 162.

L'arbre de sortie 231 de l'actionneur 23 attaque une courroie 164 qui entoure la tête 152 d'une poulie 15, comme dans le premier mode de réalisation. Cette tête de poulie 152 est solidaire d'une tige 151 dont l'extrémité porte une vis sans fin 154 en prise avec un secteur de roue 129 solidaire de la bielle principale 121.

Comme précédemment, on note respectivement X₁₃, X₁₄, X₂₃ et X₂₄ les axes d'articulation des bielles 121 et 122 sur les platines 123 et 124. Les axes X₁₃, X₁₄, X₂₃ et X₂₄ sont perpendiculaires aux axes Z₁ et Z₂.

Comme l'actionneur 23 est supporté par l'embase 10, son inertie ne pénalise pas les mouvements de l'ensemble constitué des bras 11 et 12 autour de l'axe Z₁.

L'axe central Z₂₃ de l'arbre de sortie 231 est aligné avec l'axe central Z₂₁ de l'arbre de sortie 211, ces axes étant en fait confondus avec l'axe Z₁. Cette configuration confère à la structure 1 une grande compacité, tout en permettant d'entraîner le bras 11 et l'avant-bras 12 de façon rapide et précise. En particulier, le fait que les axes Z₂₃, Z₁₆₂ et Z₁ sont confondus assure que l'entraxe entre les axes Z₂₃, Z₁₆₂ et Z₂ demeure constant, ce qui assure la tension constate des courroies 163 et 164.

Comme dans le premier mode de réalisation, la platine 124 porte un quatrième actionneur 24. Son arbre de sortie 241 forme un pignon qui engrène avec une denture annulaire 131 de la bride 13, pour entraîner cette bride en rotation autour d'un axe Z₃ parallèle aux axes Z₁ et Z₂.

Pour le troisième mode de réalisation représenté aux figures 6 à 9, on ne décrit que ce qui le distingue du deuxième mode de réalisation. L'avant-bras 12 est constitué d'une première bielle 121, dite principale, en forme de boîtier qui entoure une deuxième bielle 122, dite secondaire. La bielle 121 est articulée, avec interposition d'un roulement à billes 146, autour d'un manchon 221 appartenant à une platine 123. Cette bielle 121 est solidaire d'un arbre 222 à partir duquel s'étend un secteur denté 128 du même type que celui du premier mode de réalisation et qui est en prise avec un pignon 153, également du même type que celui du premier mode de réalisation, ceci permet d'entraîner la bielle 121 en rotation autour d'un axe X₁₃ perpendiculaire à l'axe Z₂ d'articulation verticale de l'avant-bras 12 sur le bras 11.

Deux platines auxiliaires 223 et 224 sont respectivement rendues solidaires des platines 123 et 124, par l'intermédiaire de pions 226 qui passent au travers de lumières 225 ménagées dans la bielle principale 121. Les platines auxiliaires 223 et 224 supportent les articulations de la bielle secondaire 122 autour des axes X₂₃ et X₂₄. Ainsi, les axes X₁₃ et X₂₃ restent fixes l'un par rapport à l'autre, dans le référentiel de la platine 123, comme les axes X₁₄ et X₂₄, dans le référentiel de la platine 124.

Le fait que la bielle 121 entoure la bielle 122 présente un intérêt évident en termes de sécurité, sans pénaliser l'encombrement global de l'avant-bras 12.

Un quatrième actionneur 24 est supporté par la platine 124 avec l'axe de rotation Z₂₄ de son arbre de sortie 241 parallèle à l'axe Z₂ d'articulation de l'avant-bras 12 sur le bras 11 et à l'axe Z₃ de rotation de la bride porte-outil. L'arbre 241 est relié à la bride porte-outil 13 par une courroie 165.

En ce qui concerne le quatrième mode de réalisation, on ne décrit également que ce qui le distingue du deuxième mode de réalisation.

Dans ce mode de réalisation, l'inertie de la partie terminale de la structure 1, qui porte la bride 13, est encore diminuée grâce au fait que le quatrième actionneur 24 est monté sur la platine 123 de l'avant-bras 12 par laquelle cet avant-bras est relié au bras 11.

Une première bielle 121, dite principale, est entraînée en rotation, par rapport à la platine 123 et autour d'un axe X₁₃, d'une façon comparable à celle du deuxième mode de réalisation, au moyen de courroies 163 et 164 respectivement entraînées par des deuxième et troisième actionneurs, et d'un renvoi d'angle à engrenage conique comprenant un pignon 153 et un secteur denté 128.

L'arbre de sortie 241 de l'actionneur 24 attaque une fourche 242 reliée, par un croisillon non représenté, à une première extrémité 122E de la deuxième bielle 122, dite secondaire ou auxiliaire. La deuxième extrémité 122F, opposée à la première, de la bielle secondaire est reliée, par un autre croisillon non représenté, à une deuxième fourche 243 solidaire d'un pignon 244 qui attaque une surface dentée 131 de la bride 13, afin d'entraîner cette bride en rotation autour d'un axe Z₃ vertical et parallèle à l'axe d'articulation Z₂ de l'avant-bras 12 sur le bras 11.

Les croisillons d'articulation entre les fourches 242 et 243 et la bielle 122 permettent de définir les axes X₂₃ et X₂₄. Les axes X₁₃ et X₁₄ sont définis par des arbres ou des pions, comme dans les modes de réalisation précédents.

Dans ce mode de réalisation, la bielle secondaire 122 a une double fonction : elle constitue la deuxième bielle du parallélogramme déformable constituant l'avant-bras 12 et elle transmet le mouvement de rotation représenté par la flèche F₃, du quatrième actionneur 24 vers la bride porte-outil 13.

L'articulation entre les éléments 122, 242 et 243 peut être considérée comme un double cardan.

Pour le reste, les troisième et quatrième modes de réalisation fonctionnent comme le deuxième. En particulier, trois actionneurs 21, 22 et 23 sont montés sur une embase 10 pour entraîner le bras 11 autour d'un axe vertical Z₁ et l'avant-bras 12 autour d'un axe vertical Z₂ et en pivotement vertical, autour des axes X₁₃ et X₂₃. L'avant-bras 12 forme une structure en parallélogramme déformable. Un pignon monté sur l'arbre de sortie 221 de l'actionneur 22, une partie dentée 161 de la partie 162 et des courroies 163 et 164 permettent de transmettre les mouvements de rotation respectivement du deuxième actionneur 22 à la platine 123, autour de l'axe Z₂, et du troisième actionneur 23 à la première bielle 121, à travers le renvoi d'angle à 90° 153/128.

Dans les modes de réalisation décrits, les actionneurs 21 à 24 sont formés par des motoréducteurs rotatifs électriques. Au sens de l'invention, un motoréducteur n'est pas forcément équipé d'un organe de réduction propre, auquel cas le rapport de réduction est égal à 1.

Dans tous les modes de réalisation, la première bielle 121 est principale dans la mesure où l'actionneur 23 commande à titre principal son pivotement autour de l'axe X₁₃. Ce pivotement induit le pivotement de la deuxième bielle 122 qui est donc suiveuse pour ce mouvement. Le pivotement de l'avant bras 12 en hauteur est ainsi commandé directement par l'actionneur 23, à travers la poulie 15, pour la première bielle 121 et indirectement, à travers la bielle 121 et les platines 123 et 124, pour la deuxième bielle 122.

Selon une variante de l'invention non représentée mais applicable à tous les modes de réalisation, le second actionneur 22 peut être monté sur l'embase avec l'axe de rotation de son arbre de sortie parallèle à l'axe de rotation de la poulie 162. Une courroie est utilisée pour transmettre le mouvement entre cet actionneur et cette poulie. Dans ce cas, l'actionneur 22 commande la rotation de l'avant bras 12 autour de l'axe Z₂ au moyen de deux courroies et d'une poulie intermédiaire.

Les caractéristiques techniques des modes de réalisation mentionnés ci-dessus peuvent être combinées entre elles dans le cadre de la présente invention.

Dans le cadre de la présente invention, le renvoi d'angle utilisé pour entraîner la bielle principale 121 de l'avant-bras peut comprendre un couple d'engrenages conique, spyro-conique, hypoïde ou de type CYLKRO. Dans un couple d'engrenages hypoïde, les axes de rotation du pignon et de la roue dentée ne sont pas sécants. Il peut également s'agir d'un système à vis sans fin, comme mentionné ci-dessus.

Quel que soit le mode de réalisation considéré, la structure de l'invention permet que l'encombrement global du robot, c'est-à-dire l'enveloppe des parties mobiles, soit faible dans une direction verticale, tout en permettant des mouvements horizontaux et verticaux d'amplitude significative.

## Revendications

1. Structure articulée (1) de robot multi-axes avec au moins trois degrés de liberté, cette structure comprenant :
- une embase (10) fixe,
- un bras (11) articulé sur l'embase autour d'un premier axe (Z₁),
- un avant-bras (12) articulé sur le bras autour d'un deuxième axe (Z₂) parallèle au premier axe, cet avant-bras formant une structure en parallélogramme déformable et comprenant une première bielle (121) et une deuxième bielle (122) articulées sur deux platines (123, 124), respectivement autour d'axes (X₁₃, X₁₄, X₂₃, X₂₄) perpendiculaires aux premier et deuxième axes,
- un premier actionneur électrique (21) commandant le pivotement du bras (11) autour du premier axe (Z₁),
- un deuxième actionneur électrique (22) commandant le pivotement de l'avant-bras (12) autour du deuxième axe (Z₂), et
- un troisième actionneur électrique (23) commandant le pivotement de la première bielle (121) par rapport aux platines (123, 124), autour de certains (X₁₄, X₂₄) des axes perpendiculaires aux premier et deuxième axes (Z₁, Z₂),
**caractérisée en ce que** le troisième actionneur (23) est monté sur l'embase (10) ou sur le bras (11).

2. Structure selon la revendication 1, **caractérisée en ce que** le troisième actionneur (23) est rotatif et son arbre de sortie (231) est centré sur un axe (Z₂₃) parallèle au premier axe (Z₁).

3. Structure selon l'une des revendications précédentes, **caractérisée en ce que** les moyens de transmission de mouvement entre le troisième actionneur (23) et les bielles comprennent au moins une courroie (164) et un renvoi d'angle à 90° (153/128, 154/129).

4. Structure selon la revendication 3, **caractérisée en ce que** le renvoi d'angle comprend un couple d'engrenages (153/128) conique, spyro-conique, hypoïde ou de type CYLKRO ou un système à roue et vis sans fin (154/129).

5. Structure selon l'une des revendications précédentes, **caractérisée en ce que** le troisième actionneur (23) est monté sur le bras (11).

6. Structure selon l'une des revendications 1 à 4, **caractérisée en ce qu'**au moins les premier et troisième actionneurs (21, 23) sont montés sur l'embase (10).

7. Structure selon la revendication 6, **caractérisée en ce que** le troisième actionneur (23) est de type rotatif et l'axe de rotation (Z₂₃) de son arbre de sortie (231) est aligné avec le premier axe (Z₁).

8. Structure selon l'une des revendications 6 ou 7, **caractérisée en ce que** les premier (21) et troisième (23) actionneurs sont de type rotatif et les axes de rotation (Z₂₁, Z₂₃) de leurs arbres de sortie respectifs (211, 231) sont alignés.

9. Structure selon l'une des revendications précédentes, **caractérisée en ce que** l'une (121) des deux bielles (121, 122) de l'avant-bras (12) forme un boîtier qui entoure l'autre bielle (122).

10. Structure selon l'une des revendications précédentes, **caractérisée en ce qu'**elle comprend un quatrième actionneur (24) commandant le pivotement d'une bride porte-outil (13) autour d'un axe (Z₃) parallèle aux premier et deuxième axes (Z₁, Z₂).

11. Structure selon la revendication 10, **caractérisée en ce que** la première bielle (121) est solidaire, en rotation autour d'un (X₁₃) des axes (X₁₃, X₁₄, X₂₃, X₂₄) perpendiculaires au premier et deuxième axes (Z₁, Z₂), de moyens (128) de transmission d'un mouvement généré par le troisième actionneur (23), **en ce que** la deuxième bielle (122) est suiveuse de la première bielle dans le mouvement de pivotement (F₁) des bielles par rapport aux platines (123, 124), **en ce que** le quatrième actionneur (24) est monté sur une platine (123) de l'avant-bras qui est articulée sur le bras (11), **en ce que** la bride porte-outil (13) est supportée par l'autre platine (124) et **en ce que** la deuxième bielle (122) transmet à la bride porte-outil le mouvement (F₃) généré par le quatrième actionneur (24).

12. Robot multi-axes comprenant une structure (1) articulée selon l'une des revendications précédentes.

## Claims

1. An articulated structure (1) for a multi-axis robot having at least three degrees of freedom, the structure comprising:
• a stationary base (10);
• an arm (11) hinged to the base about a first axis (Z₁) ;
• a forearm (12) hinged to the arm about a second axis (Z₂) parallel to the first axis, the forearm forming a deformable parallelogram structure and comprising a first connecting rod (121) and a second connecting rod (122) that are hinged to two plates (123, 124) about respective axes (X₁₃, X₁₄, X₂₃, X₂₄) that are perpendicular to the first and second axes;
• a first electric actuator (21) controlling pivoting of the arm (11) about the first axis (Z₁);
• a second electric actuator (22) controlling pivoting of the forearm (12) about the second axis (Z₂); and
• a third electric actuator (23) controlling pivoting of the first connecting rod (121) relative to the plates (123, 124) about some of the axes (X₁₄, X₂₄) that are perpendicular to the first and second axes (Z₁, Z₂);
**characterized in that** the third actuator (23) is mounted on the base (10) or on the arm (11).

2. A structure according to claim 1, **characterized in that** the third actuator (23) is a rotary actuator and its outlet shaft (231) is centered on an axis (Z₂₃) parallel to the first axis (Z₁).

3. A structure according to either preceding claim, **characterized in that** means for transmitting motion between the third actuator (23) and the connecting rods comprise at least one belt (164) and a 90° angle transmission (153/128, 154/129).

4. A structure according to claim 3, **characterized in that** tie angle transmission comprises a pair of gears (153/128) of the bevel, spiral-bevel, hypoid, or CYLKRO type, or a system comprising a wheel and a wormscrew (154/129).

5. A structure according to any preceding claim, **characterized in that** the third actuator (23) is mounted on the arm (11).

6. A structure according to any one of claims 1 to 4, **characterized in that** at least the first and third actuators (21, 23) are mounted on the base (10).

7. A structure according to claim 6, **characterized in that** the third actuator (23) is of the rotary type, and the axis of rotation (Z₂₃) of its outlet shaft (231) is in alignment with the first axis (Z₁).

8. A structure according to claim 6 or claim 7, **characterized in that** the first and third actuators (21, 23) are of the rotary type and the axes of rotation (Z₂₁, Z₂₃) of their respective outlet shafts (211, 231) are in alignment.

9. A structure according to any preceding claim, **characterized in that** one (121) of the two connecting rods (121, 122) of the forearm (12) forms a box that surrounds the other connecting rod (122).

10. A structure according to any preceding claim, **characterized in that** it includes a fourth actuator (24) controlling the pivoting of a tool-carrier clamp (13) about an axis (Z₃) parallel to the first and second axes (Z₁, Z₂).

11. A structure according to claim 10, **characterized in that** the first connecting rod (121) is fast in rotation, about one (X₁₃) of the axes (X₁₃, X₁₄, X₂₃, X₂₄) perpendicular to the first and second axes (Z₁, Z₂), with means (128) for transmitting motion generated by the third actuator (23), **in that** the second connecting rod (122) follows the first connecting rod in the pivoting motion (F₁) of the connecting rods relative to the plates (123, 124), **in that** the fourth actuator (24) is mounted on a plate (123) of the forearm that is hinged to the arm (11), **in that** the tool-carrier clamp (13) is supported by the other plate (124), and **in that** the second connecting rod (122) transmits to the tool-carrier clamp the motion (F₃) generated by the fourth actuator (24).

12. A multi-axis robot including an articulated structure (1) according to any preceding claim.

## Patentansprüche

1. Gelenkaufbau (1) eines Mehrachsen-Roboters mit mindestens drei Freiheitsgraden, wobei dieser Aufbau umfasst:
- einen feststehenden Sockel (10),
- einen an dem Sockel um eine erste Achse (Z₁) angelenkten Arm (11),
- einen an dem Arm um eine zweite Achse (Z₂) parallel zur ersten Achse angelenkten Vorderarm (12), der eine veränderbare Parallelogrammstruktur bildet und eine erste Gelenkstange (121) und eine zweite Gelenkstange (122) umfasst, die an zwei Platten (123, 124) jeweils um senkrecht zur ersten und zweiten Achse liegenden Achsen (X₁₃, X₁₄, X₂₃, X₂₄) angelenkt sind,
- ein erstes elektrisches Stellglied (21), das das Schwenken des Arms (11) um die erste Achse (Z₁) steuert,
- ein zweites elektrisches Stellglied (22), das das Schwenken des Vorderarms (12) um die zweite Achse (Z₂) steuert und
- ein drittes elektrisches Stellglied (23), das das Schwenken der ersten Gelenkstange (121) in Bezug auf die Platten (123, 124) um bestimmte Achsen (X₁₄, X₂₄) der zu der ersten und der zweiten Achse (Z₁, Z₂) senkrecht liegenden Achsen steuert,
**dadurch gekennzeichnet, dass** das dritte Stellglied (23) an dem Sockel (10) oder an dem Arm (11) befestigt ist.

2. Aufbau nach Anspruch 1, **dadurch gekennzeichnet, dass** das dritte Stellglied (23) rotierend ist und seine Ausgangswelle (231) auf eine Achse (Z₂₃) parallel zur ersten Achse (Z₁) zentriert ist.

3. Aufbau nach einem der vorhergehenden Ansprüche, **dadurch gekennzeichnet, dass** die Mittel zur Übertragung der Bewegung zwischen dem dritten Stellglied (23) und den Gelenkstangen mindestens einen Antriebsriemen (164) und eine 90°-Eckumlenkung (153/128, 154/129) aufweisen.

4. Aufbau nach Anspruch 3, **dadurch gekennzeichnet, dass** die Eckumlenkung ein konisches, spyrokonisches, hypoides Getriebepaar (153/128) oder ein solches der Art CYLKRO oder ein System mit Rad und Schnecke (154/129) umfasst.

5. Aufbau nach einem der vorhergehenden Ansprüche, **dadurch gekennzeichnet, dass** das dritte Stellglied (23) an dem Arm (11) befestigt ist.

6. Aufbau nach einem der Ansprüche 1 bis 4, **dadurch gekennzeichnet, dass** mindestens das erste und dritte Stellglied (21, 23) an dem Sockel (10) befestigt sind.

7. Aufbau nach Anspruch 6, **dadurch gekennzeichnet, dass** das dritte Stellglied (23) ein rotierendes Stellglied ist und die Drehachse (Z₂₃) seiner Ausgangswelle (231) zu der ersten Achse (Z₁) ausgerichtet ist.

8. Aufbau nach einem der Ansprüche 6 oder 7, **dadurch gekennzeichnet, dass** das erste (21) und das dritte (23) Stellglied rotierende Stellglieder sind und die Drehachsen (Z₂₁, Z₂₃) ihrer jeweiligen Ausgangswellen (211, 231) zueinander fluchten.

9. Aufbau nach einem der vorhergehenden Ansprüche, **dadurch gekennzeichnet, dass** eine (121) der zwei Gelenkstangen (121, 122) des Vorderarms (12) ein Gehäuse bildet, das die andere Gelenkstange (122) umgibt.

10. Aufbau nach einem der vorhergehenden Ansprüche, **dadurch gekennzeichnet, dass** er ein viertes Stellglied (24) aufweist, das das Schwenken eines Werkzeugträgers (13) um eine Achse (Z₃) parallel zur ersten und zweiten Achse (Z₁, Z₂) steuert.

11. Aufbau nach Anspruch 10, **dadurch gekennzeichnet, dass** die erste Gelenkstange (121) rotatorisch um eine (X₁₃) der Achsen (X₁₃, X₁₄, X₂₃, X₂₄) senkrecht zu der ersten und zweiten Achse (Z₁, Z₂) mit Mitteln (128) zur Übertragung einer Bewegung, die von dem dritten Stellglied (23) erzeugt wird, verbunden ist, dass die zweite Gelenkstange (122) der ersten Gelenkstange in der Schenkbewegung (F₁) der Gelenkstangen in Bezug auf die Platten (123, 124) folgt, dass das vierte Stellglied (24) an einer Platte (123) des Vorderarms befestigt ist, der an dem Arm (11) angelenkt ist, dass der Werkzeugträger (13) von einer weiteren Platte (124) getragen wird und dass die zweite Gelenkstange (122) dem Werkzeugträger die Bewegung (F₃) überträgt, die von dem vierten Stellglied (24) erzeugt wird.

12. Mehrachsenroboter, umfassend einen Gelenkaufbau (1) nach einem der vorhergehenden Ansprüche.
